# EUROPEAN PATENT SPECIFICATION

(11) **EP 4 682 498 B1**
(45) Date of publication and mention of the grant of the patent: **09.12.2026**
(21) Application number: 25189990.2
(22) Date of filing: 16.07.2025
(51) Int. Cl.: G01M 3/04, F41H 9/06, G01M 3/20

(54) **IMPROVED SMOKE GENERATOR**
VERBESSERTER RAUCHGENERATOR
GÉNÉRATEUR DE FUMÉE AMÉLIORÉ

(30) Priority: 17.07.2024 BE 202405469
(43) Date of publication of application: 21.01.2026
(73) Proprietor: Alpha Drain Solutions, 9080 Lochristi (BE)
(72) Inventor: Vink, Dominique, 9080 Lochristi (BE)
(74) Representative: Patentales BV

(56) References cited:
- CN-U- 204 073 456
- US-A1- 2007 297 774
- US-A1- 2010 326 171

## Description

### TECHNICAL FIELD

The invention relates to a device and system for smoke production, more particularly to a smoke generator and components of a smoke generator appropriate for leak detection.

### PRIOR ART

In the prior art, smoke generators are known which have been adapted for producing smoke, which may be used in a (pipe)line system by propagation to detect the presence and location of possible leaks in this piping system.

By means of visual inspection of propagation of smoke outside the pipe, an operator can determine where the pipe is (or is not) permeable to air, as a step in the detection of leaks in the pipe, or as actual leak detection, including the determination of the location of the leaks. This then allows sealing of the piping system, based on the detected location(s) of leaks.

Current state-of-the-art systems are based on the evaporation of an oil-based fluid by heating for producing the smoke. While this may result in high-density smoke, which may be desirable for leak detection applications, it comes with significant disadvantages, such as a long residual odour and the risk of grease traces around the piping system and/or any leaks. In addition, the use of oils for this application is environmentally harmful.

When smoke is produced, heat problems may occur around the heating element, which are inherently linked to the heating realised by the heating element.

EP3060897B1, US20100326171A1 and US11541324B2 describe related concepts but do not provide any precautions for possible heat problems around the heating element. In addition, they are not convenient to use due to excessive weight or volume and/or are only useful for application with oil-based fluid.

US 2010326171A1 and CN204073456U also describe related concepts but also do not provide any precautions for possible heat problems around the heating element.

There is a need for devices and systems that do take into account possible heat problems, and that are convenient to use. The invention thereby aims to solve the above-mentioned problems.

### SUMMARY OF THE INVENTION

The invention relates to a device, system and use related to a smoke generator and its components.

In a first aspect, the invention provides a device for leak detection by means of smoke, comprising
- a fan;
- an evaporating element defining a channel between a first channel end for receiving an air flow from the fan and a second channel end for external discharge of smoke; and
- a heating element configured for vaporising a fluid and adding vapour in said channel;

wherein said evaporating element and said heating element are arranged in a first compartment and wherein said fan is arranged in a second compartment different from said first compartment;
wherein said first and second compartments are separated from each other by a wall which is preferably common.

Such a device may provide a precaution and solution to heat problems that may arise around the heating element. For smoke production, the smoke generator comprises electronic components that are sensitive to moisture and water, but are protected from these by the advantageous compartmentalisation.

Possible heat problems can be both direct and indirect. Direct problems include overheating, a problem that arises naturally when evaporating the fluid through the heating element. Providing a separate compartment prevents this heat from propagating freely in the device. There are also potential indirect heat problems, as warm surfaces of and around the heating element may constitute a thermal bridge, and thus lead to significant condensation. By separating the first compartment from other parts of the device, it can be ensured that electronic components, such as the fan or any control unit present in the device, are not exposed to this condensation, resulting in an improved lifetime and a more reliable operation.

In addition, such a device may provide a precaution and solution to the inherent potential moisture problems that arise when working with smoke based on the evaporation of a fluid. It is indeed inherent to the operation that small amounts of fluid escape when transferring it to the heating element or at the level of the heating element or evaporating element. By arranging the respective components in a separate compartment, it may also be ensured that electronic components, such as the fan or any control unit present in the device, are not exposed to the fluid, resulting in an improved lifetime and a more reliable operation.

Thus, the invention allows the various components to be arranged and separated from each other in a functional manner. This does not have to result in any weight increase, and, on the contrary, may actually lead to a reduction in overall weight, as the compartment walls inherently contribute to the structural integrity of the entire device. This is ideally the case in embodiments wherein one or more compartment walls, or even all compartment walls, are made of plastic, which is a light material. This is even more the case in embodiments wherein one or more walls separating the compartments are common, i.e. single-walled, because this simultaneously provides sufficient structural integrity (due to the presence of a wall) combined with the light weight (due to avoidance of non-common walls, which would lead to a double-walled assembly).

In summary, the invention may provide advantageous functional separation between hot and cold zones, as well as advantageous separation between fluid-rich and fluid-poor zones. The use of separate compartments allows each to be individually adapted to the geometry of the contents, enhancing its compactness as well as its modularity. For example, the second compartment enclosing the fan can also be shaped according to the shape of the fan, providing a more compact finishing than in the case of a straight finishing of the housing. Furthermore, in embodiments, the invention allows opting for common walls made of plastic, wherein both geometry (common walls instead of separate walls per module) and choice of material (plastic instead of metal) can contribute to the portable, "hand-held" character. In embodiments, this also includes a handle.

In still other embodiments, all compartment walls are made of the same material (not necessarily plastic), which simplifies production (e.g. by 3D printing), and which has various mechanical advantages as known to the skilled worker, such as a uniform expansion and contraction when heating and cooling.

In embodiments, the first and second compartments are separated from each other by a plurality of compartment walls which are all common and are all made of the same plastic. Such embodiments may have the advantage that they can be readily adapted in shape and dimension to be both compact and readily portable for an operator, while still arranging and/or separating all elements from each other in a functional manner by means of the separate compartments, with any heat and condensation building up in the first compartment not simply propagating to another compartment (such as the second compartment, or, in embodiments, the third compartment).

In embodiments, all compartment walls of all compartments are made of the same plastic. This allows for a very lightweight device, allowing the device to be hand-held.

In a second aspect, the invention relates to a smoking chamber element, comprising:
- walls and a bottom defining a circumferentially sealed and bottom-sealed first compartment;
- an air inlet and a smoke outlet provided along opposite sides of the first compartment as respective openings through the wall;
- means for detachably connecting the smoke chamber element with a sealing cap for closing off the first compartment at the top;
- means for anchoring, when arranged inside the first compartment, a heating element for vaporising a fluid;
- means for aligned anchoring, when arranged inside the first compartment, an evaporating element defining a channel between two channel ends;
wherein aligning of the anchoring is related to aligning the one channel end with the air inlet and aligning the other channel end with the smoke outlet for vaporising the fluid into smoke flowing through the channel according to a propagation direction extending through the first compartment.

A specifical advantage here is the design with a removable sealing cap, which, together with its modular structure, can simplify maintenance.

In a third aspect, the invention provides for a use of the smoke chamber element for leak detection by means of smoke. Such a use may be advantageous because it may allow for reliable hand-held devices with little need for maintenance, due to the good separation of moisture-rich and moisture-poor zones, which is particularly desirable for leak detection applications, wherein different piping systems in different locations have to be inspected for leaks each time.

In a fourth aspect, the invention provides for a system comprising the device according to the invention and a fluid reservoir comprising a water-based glycerine solution.

The second, third and fourth aspects may provide advantages similar to those of the device according to the invention. Embodiments according to the dependent claims and their respective potential advantages are explained in the detailed description.

### DESCRIPTION OF THE FIGURES

**Figure 1** is an exemplary embodiment of the device and system according to the invention.
**Figure 2** thereby shows the various components of the device according to the exemplary embodiment of Figure 1, with respective Figs 2A-2J each showing a respective different component.
**Figure 3** provides an exploded view of the various components of the system according to the exemplary embodiment of Figure 1.

### DETAILED DESCRIPTION

Unless otherwise defined, all terms used in the description of the invention, including technical and scientific terms, have the meaning as generally understood by those skilled in the technical field of the invention. For a better assessment of the description of the invention, the following terms are explicitly explained. "A", "an" and "the" refer to both singular and plural in this document unless the context clearly assumes otherwise. For example, "a segment" means one or more than one segment. The citation of numerical intervals by the endpoints includes all integers, fractions and/or real numbers between the endpoints, these endpoints included.

The device according to the invention relates to a smoke generator. In embodiments, the device is a smoke generator. Thereby, the device may be adapted for producing smoke. More specifically, the produced smoke may be used in a (pipe)line system by propagation to detect the presence and location of possible leaks in this piping system. In embodiments, the piping system is related to a plumbing system and/or a heating system and/or an air conditioning system.

The invention provides specific advantages over the concept presented in EP3060897B1. Indeed, EP3060897B1 does not describe the integration of a fan and smoke generation in the same generator, as the generator of EP3060897B1 is fed with a press line, and it is not possible to come to a hand-held device. Also, EP3060897B1 does not describe any compartmentalisation of the device, so no precautions have been taken regarding heat and condensation and fluid propagation. In addition, it should be noted that, unlike certain embodiments according to the invention, EP3060897B1 does not include plastic walls or common walls.

The invention is also different from what is described in US20100326171A1 and US11541324B2, which does not provide any compartmentalisation, so no precautions have been taken either with regard to heat and condensation and fluid propagation.

Also, unlike certain embodiments according to the invention, US20100326171A1 and US11541324B2 do not include plastic walls or common walls.

In preferred embodiments, the device according to the invention uses a solution of glycerine as a fluid for producing the smoke. This does not relate to the oil-based solution (common in the market), but on the contrary to a water-based glycerine solution. In exemplary embodiments, the solution is heated to temperatures higher than or equal to 200°C, e.g. 220 or 240 or 260 or 280 or 300°C. Such heating can result in condensation and heat, for which compartmentalisation may be useful.

In embodiments, the one or more compartment walls between the first compartment and the second compartment are at least partially common walls. In embodiments, the one or more compartment walls between the first compartment and the third compartment are at least partially common walls. In embodiments, the one or more compartment walls between the second compartment and the third compartment are at least partially common walls. This has the possible advantage that weight increase (e.g. due to double-walled structure) is at least partially avoided.

In embodiments, the wall between the first compartment and the second compartment is a common wall. In embodiments, the wall between the first compartment and the third compartment is a common wall. In embodiments, the wall between the second compartment and the third compartment is a common wall. This has the possible advantage that weight increase (e.g. due to double-walled structure) can be avoided locally. Such design is advantageously combined with embodiments with a modular structure, in which each compartment is composed of one or more sections provided with complementary cut-outs so that each internal wall, i.e. each wall separating compartments, is single walled.

In embodiments, the common wall between the first and second compartment comprises a protrusion defining a protrusion volume belonging to the first compartment and extending towards the second compartment beyond a plane of the common wall. Such protrusion offers the advantage that there may be a larger surface for heat dissipation built up in the first compartment towards the second compartment. Thereby, the protrusion volume extends beyond the plane of the common wall, surrounding this volume with the colder environment provided by the second compartment. This can help realize cooling and address the heat problem without any propagation of potentially humid air from the first to the second compartment. In addition, the protrusion may have the advantage of obtaining better interlocking between the one or more parts of the first compartment and the one or more parts of the second compartment. Thereby, the protrusion may provide a structural improvement of the force transfer between the first and second compartment.

In embodiments, the device comprises a handle extending from at least one handle end, preferably wherein the handle extends between two handle ends in a direction transverse to the common wall; wherein said at least one handle end is attached at the level of said protrusion, and wherein said device is adapted to be hand-held, by means of the handle and a total weight not exceeding 30 kg, preferably not exceeding 25 kg, more preferably not exceeding 20 kg, more preferably not exceeding 15 kg. Such embodiments make advantageous use of the presence of the protrusion to position the handle closer to the wall between first and second compartment. In exemplary embodiments, this means that the handle is brought into closer proximity to the centre of mass of the device, making the device easier to handle, and having less or no tendency to tilt when lifted by means of the handle. Furthermore, the handle (either with only one end or with two ends) is connected at least with one end at a structurally advantageous location, i.e., at the level of the protrusion, where force transfer towards both the first compartment and the second compartment is optimally possible. Thus, in such embodiments, the protrusion can fulfil a fourfold role, ranging from improving heat dissipation and improving structural integrity between compartments to a better position of the handle (closer to the centre of mass) and a better force transfer from the handle towards the various parts of the device when lifted.

In embodiments, the first compartment comprises a bottom which is essentially watertight. The watertightness may thereby be inherent in the design (with a fully closed bottom) or may be implied by assembly (when, for example, holes for screws are present, which are sealed by these screws when assembling the device). Such design of the first compartment may be advantageous because it may prevent condensation and amounts of fluid from propagating to the other parts of the device. This allows components which are sensitive to moisture, such as the control unit, to be arranged in a compartment located below the first compartment when operating. This in turn helps realizing a device that is both compact and reliable. In related embodiments, the device includes an electrically powered control unit which is provided in a third compartment distinct from the first and second compartments, wherein the third compartment and the first compartment are at least partially separated from each other by a common wall being the bottom of the first compartment.

In embodiments, the wall between the first compartment and the second compartment comprises a passage for diverting heat from the first compartment to the second compartment. Such embodiments make it possible to further avoid the heat problem. By providing this passage in the wall (rather than in the bottom or towards the outside) and towards the second compartment, heat is diverted from the hot first compartment to the second compartment which is well ventilated and therefore cooler. Any residual condensation present in the circulated air is considered to be limited and not to interfere with the operation of the (e.g., electric) fan. Thereby, it is advantageously avoided to pass any air to a compartment containing more sensitive electronics, such as, for example, a possible third compartment containing a control unit. In related embodiments, the device thereby comprises means for heat dissipation, preferably a second fan, which is provided at the level of the passage for heat dissipation from the first compartment to the second compartment. Such means, e.g. in the form of a small second fan (much smaller than the fan present in the second compartment), allows to ensure in a controlled manner that heat dissipation is adequate. In embodiments, these means are thereby adjustable in flow rate, wherein the control unit can dynamically adjust the flow rate based on a pre-programmed schedule and/or based on a temperature sensor present in the device, for example at the level of the first compartment or at the level of these means.

In embodiments, compartment walls of the first and second compartments, preferably compartment walls of the first, second and third compartments comprise plastic, preferably comprising the same plastic. This may benefit the lightness and/or easy production of the device.

In embodiments, the first and second compartments, preferably each of the first, second and third compartments, are separated by a plurality of compartment walls, all of which are common. This may benefit the lightness and/or easy production of the device. In related embodiments, each compartment is composed of one or more sections provided with complementary cut-outs so that each wall separating compartments is single walled. This may further benefit the lightness and cost-efficient production.

In embodiments, the first and second compartments, preferably each of the first, second and third compartments, are interconnected in a detachable way. Such modularity allows quick and flexible maintenance.

In embodiments, the first compartment is defined by a smoke chamber element and a cover cap; wherein the smoke chamber element comprises walls and a bottom defining the first compartment all around and at the bottom, and wherein the cover cap defines the first compartment at the top; and wherein the smoke chamber element and the cover cap are detachably connected to each other. Such design allows fast and flexible maintenance, where an operator only needs to remove the top to access the first compartment, which may have more maintenance needs than other compartments due to heat effects.

In embodiments of the system, a reservoir of glycerine solution is provided which is received at the top of the device in a complementary recess adapted so that the reservoir partially protrudes from the outer contour of the device. This may have the advantage of allowing a more compact device, which is particularly useful when the reservoir is not present, e.g. for longer storage and certain transportation.

In a further aspect, which is not intended to limit the invention, the invention provides a method for controlling a smoke generator, such as, for example, the device of the invention, wherein the control unit is configured such that the fan always reaches at least a certain minimum flow rate as long as the smoke generator is switched on (e.g., with the ON/OFF button set to ON and the power cord plugged in). This offers the advantage that it may further prevent overheating. After all, when performing leak detection, it is typically the case that smoke is first sent into a pipe by an operator (first stage), after which the pipe is ventilated for a while to ensure smoke propagation, without generating any more smoke (second stage). By preventing the fan from being turned off, natural support is provided for the second stage. At the same time, further cooling of the components present in the first compartment is ensured thanks to the air flow generated by the fan which is still active. Imposing a minimum flow rate thus contributes to the correct use of the smoke generator, while at the same time, it increases its lifetime. In preferred embodiments, if a second fan is present, this second fan is also kept active. In preferred embodiments, the smoke generator is not powered by mains voltage but by a battery (internal or external), preferably a rechargeable battery. In such embodiments, it is possible to impose this minimum flow rate even more forcibly, in that the mains voltage can no longer be interrupted, and, in certain embodiments, the fan (and by extension, also the second fan) continues to run for a certain time (whether or not based on measurement of a temperature sensor present in the device, for example at the level of the first compartment or at the level of a second fan) even if the device is switched off.

In what follows, the invention will be described using non-limiting examples illustrating the invention, which are not intended or to be interpreted to limit the scope of the invention.

### EXAMPLE

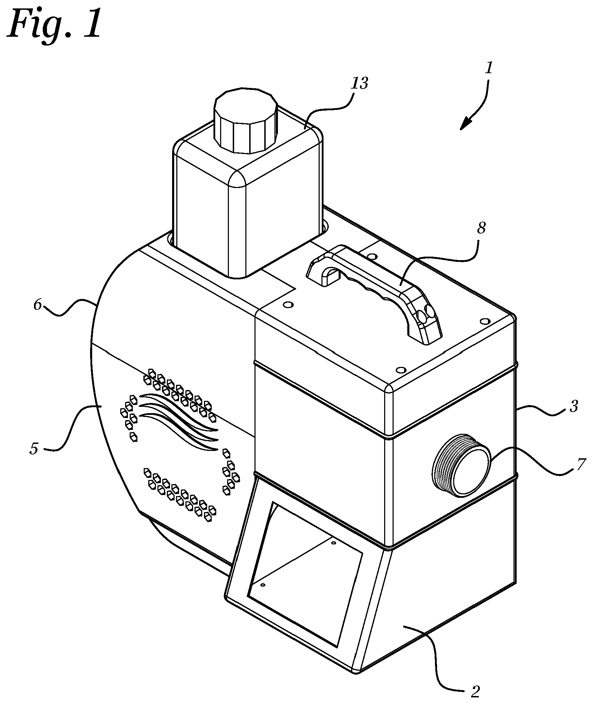

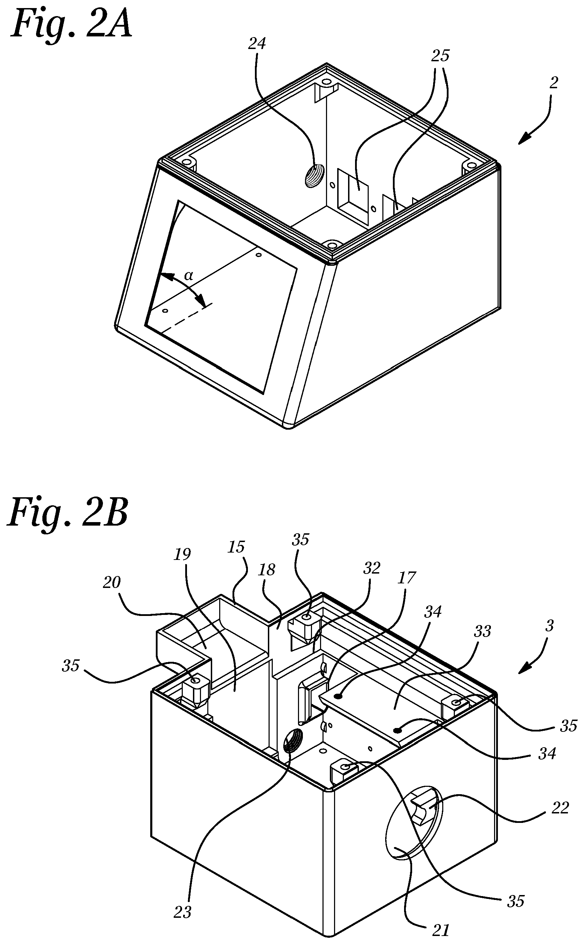

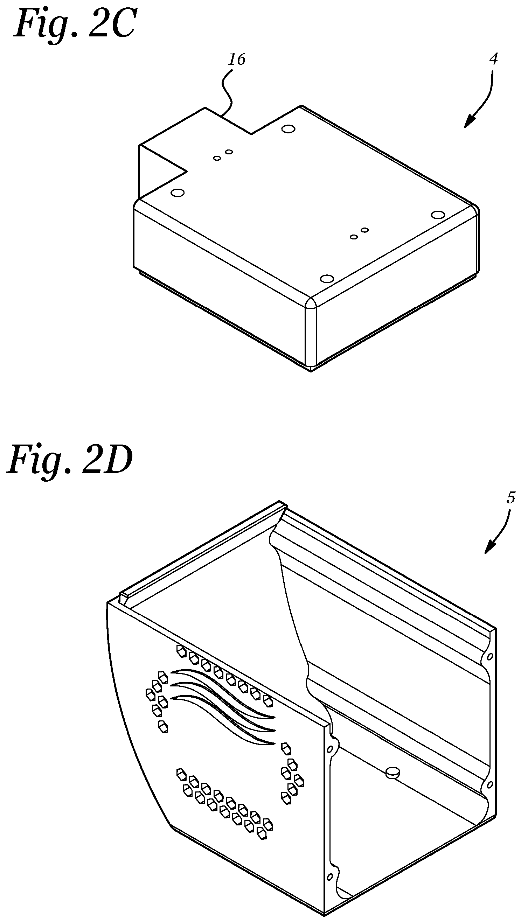

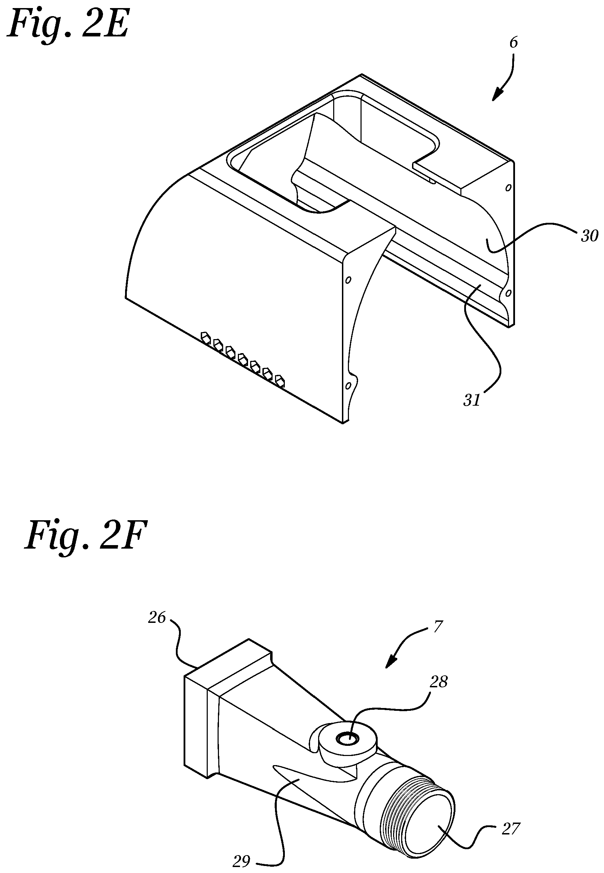

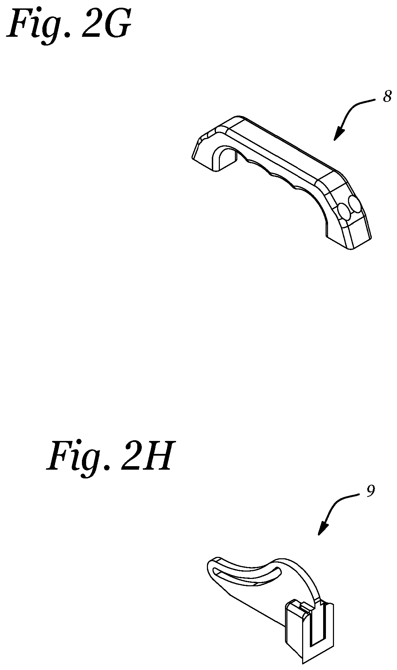

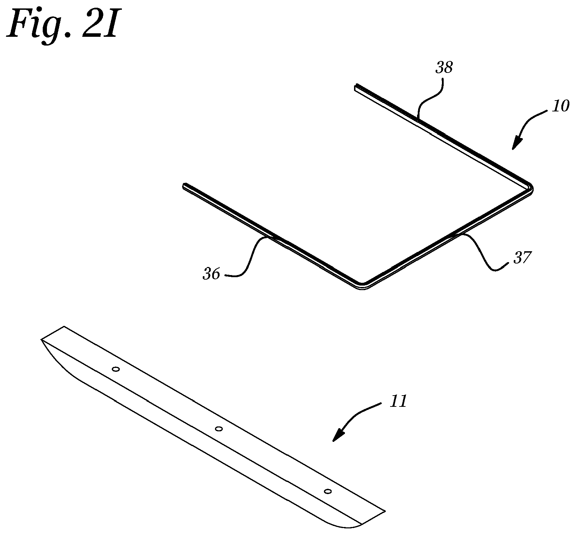

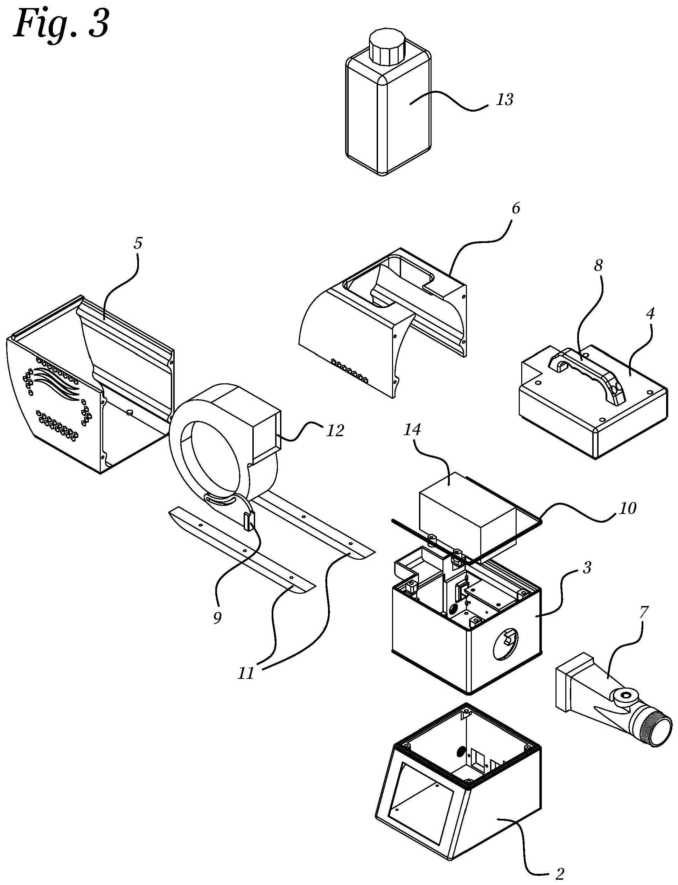

Figures 1-3 show an exemplary embodiment of the device and system according to the invention. Thereby, Figure 2 shows a illustration of the various components of the device according to this example, with respective Figs 2A-2J each showing a respective different component. Figure 3 in turn provides an exploded view of the various parts of the system according to this example. For the sake of consistency, reference is made in this example with reference marks without necessarily also mentioning the figure, where various reference marks appear on more than one figure.

The exemplary device 1 is intended for leak detection by means of smoke, and is characterised by two lateral sides, a substantially flat lower surface and a substantially flat upper surface, a proximal smoke outlet side with substantially straight profile and a distal side with curved contour which follows the shape of the fan which is present in the device.

The device 1 is composed of three compartments.

The first compartment is jointly realised by smoke chamber element 3 and sealing cap 4. These parts can be interconnected in a detachable way by means of screws engaging in screw openings 35 provided for that purpose in the four corners of the open top of the smoke chamber element. In variants of this example, means are provided differently from screws which are also suitable for detachably connecting the smoke chamber element 3 with the sealing cap 4 for sealing the first compartment at the top. When connecting the elements, a seal 10 is provided over the lateral sides and the smoke outlet side. This seal may consist of a silicone or natural rubber or other material suitable for sealing as known to the skilled worker. The seal thereby describes a rectangular U-shape and comprises second lateral portions 36, 38 as legs connected by a smoke outlet side portion 37. This seal provides semi-hermetic or essentially hermetic sealing of the first compartment. No sealing is provided in the direction of the distal side since it is already realised, with the device in its assembled state, by the wall of the upper shell 6, in particular the wall facing the first compartment.

The smoke chamber element 3 comprises walls and a bottom which define a circumferentially sealed and bottom-sealed first compartment. It is provided with an air inlet 19 facing the second compartment and a smoke outlet 21 facing the smoke outlet side. The smoke outlet and air inlet are provided along opposite sides of the first compartment as respective openings through the wall.

The inner side of the smoke chamber element 3 is provided with means 33 for anchoring, when arranged inside the first compartment, a heating element 14 for evaporating a fluid. This involves a cantilever 33 extending from a lateral inner wall of the smoke chamber element and provided with two openings 34 for anchoring the heating element on the cantilever. In variants of this example, either one cantilever is provided which extends inward from one lateral inner wall, or, on the contrary, two respective cantilevers are provided which extend inward from the two respective lateral inner walls.

The bottom of the smoke chamber element 3 is essentially watertight. It comprises openings for screws in the four corners, which, in the case of a detachable connection with the electronics housing element 2, are sealed watertight, so that the bottom is watertight.

The bottom of the smoke chamber element 3 is provided with means 22 for aligned anchoring, when arranged inside the first compartment, of the evaporating element 7 which defines a channel between two channel ends 26, 27. This specifically involves two columnar elements 22 (one of both is visible in Fig. 2B) placed on either side of the propagation direction. Due to the specific shape of these columnar elements 22 and complementary lateral ribs 29 present on the evaporating element 7, the evaporating element is clamped between these elements when assembling. The evaporating element 7 thereby has a tapered shape, with the channel narrowing from a wider rectangular channel end 26 to a narrower and round channel end 27. The round channel end 27 has been modified in shape to fit the opening 21 of the smoke outlet. The latter is threaded on the outer surface for coupling with further elements.

The clamping of the evaporating element 7 between the elements 22 is such that the one channel end 26 thereby aligns with the air inlet 19 and the other channel end 27 with the smoke outlet 21 for evaporating the fluid into smoke flowing through the channel according to a propagation direction extending through the first compartment. The vapour opening 28 is thereby intended for connection to the heating element, for adding vapour to the channel.

Once the evaporating element 7 is clamped, the rectangular channel end 26 may then be sealed to the air inlet 19, either with glue and/or a silicone and/or natural rubber, and the heating element 14 can also be placed on top of the vapour opening 28 and be sealed. This is advantageous and easy because the various components have already been aligned.

The wall 18 between the first compartment and the second compartment comprises a passage 17. In this example, this passage is intended for diverting heat from the first compartment to the second compartment. In variants of this example, this passage is intended for guiding a plastic connecting hose (not shown) connecting the reservoir 13 to the heating element 14. In still other variants, the passage is intended both for guiding the connecting hose and for diverting heat.

In still other variants, a passage for heat dissipation is provided, either alternatively or additionally, at higher portions of the wall (not shown), as a recess in the wall of the sealing cap 4 facing the second compartment. Thereby, it may be advantageous to provide this recess in either, or both portions of the wall which do not belong to the protrusion 16.

Irrespective of the precise location of the one or more passages, in variants of this example, means for heat dissipation, preferably a second fan, may be provided at the level of this one or more passages (for example, passage 17). This allows to actively divert heat from the first (warmer) compartment to the second (colder) compartment.

The wall 18 between the first compartment and the second compartment comprises a conduit opening 23 for routing electrical wiring of the heating element and/or further wiring for a possible second fan or temperature sensor. In this example, this wiring is routed through the conduit opening by means of a screwed locking device which engages the threads provided on the inside of the conduit opening 23. The wiring runs down through the common wall 18 in the second compartment, and, from there, passes through another conduit opening 24 inside the electronics housing element 2, towards the control unit (not shown).

The first compartment is provided with a protrusion, realised in a lower protrusion section 20 belonging to the smoke chamber element 3 and a complementary upper protrusion section 16 belonging to the sealing cap 4.

The protrusion 15, 16 defines a protrusion volume belonging to the first compartment and extending towards the second compartment beyond a plane of the common wall 18.

A handle 8 is provided on the upper surface of the sealing cap 4. It extends between two handle ends in a direction transverse to the common wall 18. The medial handle end is thereby attached at the level of the protrusion, which is convenient, since, thanks to this protrusion, the handle is completely mounted on the same part (the sealing cap) and is brought as close as possible above the centre of mass, thus preventing tipping and torsion when lifting, and as a result of which the device, weighing less than 30 kg, is hand-held.

The second compartment is defined by an upper shell 6 and a complementary lower shell 5. The two sections are open inwards. These are complementary recesses so that the wall 18 separating the first and second compartments is a single wall, contributing to a lightweight design. The second compartment encloses the fan 12 and is thereby shaped according to the shape of the fan.

Both the upper 6 and lower 5 shell are provided with a sloping inner surface, with a solid vault 30 which ensures structural integrity, as well as several ribs 31 which extend in the propagation direction (longitudinal direction) and have a further reinforcing effect.

The fan 12 of this example is of the centrifugal fan type, with a single inlet which draws in air through a pattern of openings provided in the outer surface of the lower shell 5 of the second compartment. The fan is forward-curved, and the outlet is shaped to match the air inlet 19 in shape and dimensions. Power supply and control for the fan are provided with wiring which is routed through the conduit opening 23 to the control unit provided in the third compartment. The fan 12 is anchored to the lower shell by means of an anchoring element 9. On the bottom of the lower shell 5, ribs 11 are provided on opposite lateral sides which, when mounted, extend in the longitudinal direction and improve the structural integrity of the bottom.

The third compartment is defined by the electronics housing element 2. The bottom is closed and the wall along the smoke discharge side is also closed. The element is open towards the top; when mounted, the sealing is provided by the bottom of the smoke chamber element, which acts as a common wall.

At a lateral side, here the front side, the electronics housing element 2 is provided with a chamfered wall which comprises an instrument panel recess and forms an angle α (alpha) with the bottom surface. In this example, this angle is 70 degrees, in variants of this example, the angle is between 60 and 90 degrees, for example 60 or 70 or 80 or 90 degrees. The instrument panel recess is provided for receiving an instrument panel (not shown) which preferably comprises the control unit. Thereby, the angle is chosen in such way that the instrument panel can be operated smoothly when the device is at a lower location or on the ground. At the other lateral side, i.e. the rear side, it is provided with four rectangular utility cut-outs 25, intended for connectors for a connection to a power cord, an ON/OFF switch, and two further connectors (e.g. DMX connectors). All these connectors are connected to the instrument panel by wiring, with further wiring to the other compartments being realized by means of the conduit opening 24 which is internally threaded to allow securing with a securing element.

### (END OF EXAMPLE)

It is assumed that the present invention is not limited to the embodiments described above and that some modifications or changes can be added to the described examples within the scope of the added claims. For example, the present invention was described with plastic parts for defining compartments and a housing, but these could also be one or more other materials. Also, the invention was described with smoke generation by means of a fluid containing a water-based glycerine solution, but it may be any other solution suitable for smoke generation as known to the skilled worker. For example, it may be an oil-based solution, or a water-based solution with a component other than glycerine.

## Claims

1. A device (1) for leak detection by means of smoke, comprising
- a fan (12);
- an evaporating element (7) defining a channel between a first channel end (26) for receiving an air flow from the fan (12) and a second channel end (27) for external exhaust of smoke; and
- a heating element (14) configured for evaporating a fluid and adding vapour to said channel;
**characterized in that** said evaporating element (7) and said heating element (14) are provided in a first compartment and wherein said fan (12) is provided in a second compartment different from said first compartment;
wherein the first and second compartments are separated from each other by a wall (18) which is preferably common.

2. The device (1) according to claim 1, wherein the wall (18) is a common wall.

3. The device (1) according to claim 2, wherein the common wall (18) comprises a protrusion (15, 16) which defines a protrusion volume belonging to the first compartment and extending towards the second compartment beyond a plane of the common wall (18).

4. The device (1) according to claim 3, further comprising a handle (8) extending from at least one handle end, preferably wherein the handle extends between two handle ends in a direction transverse to the common wall (18);
wherein said at least one handle end is attached at the level of said protrusion, and
wherein said device (1) is adapted to be hand-held, by means of the handle (8) and a total weight not exceeding 30 kg.

5. The device (1) according to claims 1-4, wherein the first compartment comprises a bottom which is substantially watertight.

6. The device (1) according to claim 5, further comprising an electrically powered control unit provided in a third compartment distinct from the first and second compartments;
wherein the third compartment and the first compartment are at least partially separated from each other by a common wall being the bottom of the first compartment.

7. The device (1) according to claims 1-6, wherein the wall (18) between the first compartment and the second compartment comprises a passage (17) for diverting heat from the first compartment to the second compartment.

8. The device (1) according to claim 7, further comprising means for heat dissipation, preferably a second fan, which are provided at the level of the passage (17) for diverting heat from the first compartment to the second compartment.

9. The device (1) according to claims 1-8, wherein compartment walls of the first and second compartment, preferably comprising compartment walls of the first, second and third compartments, comprise plastic, preferably consist of the same plastic.

10. The device (1) according to claims 1-9, wherein the first and second compartments, preferably each of the first, second and third compartments
- are separated from each other by a plurality of compartment walls, all of which are common;
**and/or**
- are connected in a mutually detachable way.

11. The device (1) according to claims 1-10, wherein each compartment (2, 3-4, 5-6) is composed of one (2) or more sections (3-4; 5-6) which are provided with complementary recesses so that each wall separating compartments is a single wall.

12. The device (1) according to claims 1-11, wherein the first compartment is defined by a smoke chamber element (3) and a cover cap (4);
wherein the smoke chamber element (3) comprises walls and a bottom defining a first compartment around and at the bottom, and wherein the cover cap (4) defines the first compartment at the top; and
wherein the smoke chamber element (3) and the cover cap (4) are connected in a mutually detachable way.

13. A system comprising the device (1) according to claims 1-12 and a fluid reservoir comprising a water-based glycerine solution.

14. A smoke chamber element (3) comprising:
- walls and a bottom defining a circumferentially sealed and bottom-sealed first compartment; **characterized in that** the smoke chamber element (3) further comprises:
- an air inlet (19) and a smoke outlet (21) provided along opposite sides of the first compartment as respective openings through the wall;
- means (35) for detachably connecting the smoke chamber element (3) with a sealing cap (4) for sealing the first compartment at the top;
- means (33) for anchoring, when arranged inside the first compartment, a heating element (14) for vaporising a fluid;
- means (22) for the aligned anchoring, when arranged inside the first compartment, of an evaporating element (7) defining a channel between two channel ends (26, 27);
wherein the aligned anchoring is related to the alignment of the one channel end (26) with the air inlet (19) and the alignment of the other channel end (27) with the smoke outlet (21) for vaporising the fluid into smoke flowing through the channel according to a propagation direction extending through the first compartment.

15. A use of the smoke chamber element (13) according to claim 14 for leak detection by means of smoke; wherein a first compartment defined by the smoke chamber element (13) is connected to a second compartment different from the first compartment; wherein the second compartment comprises a fan (12); and wherein the first and the second compartment are separated by a wall (18) which is preferably common.

## Patentansprüche

1. Vorrichtung (1) zur Leckerkennung mittels Rauch, umfassend
- ein Gebläse (12);
- ein Verdampfungselement (7), das einen Kanal zwischen einem ersten Kanalende (26) zum Aufnehmen eines Luftstroms von dem Gebläse (12) und einem zweiten Kanalende (27) zum Ableiten von Rauch nach außen bildet; und
- ein Heizelement (14), das zum Verdampfen eines Fluids und zum Einleiten von Dampf in den Kanal ausgelegt ist;
**dadurch gekennzeichnet, dass** das Verdampfungselement (7) und das Heizelement (14) in einem ersten Fach bereitgestellt sind und dass das Gebläse (12) in einem zweiten Fach bereitgestellt ist, das sich von dem ersten Fach unterscheidet;
wobei das erste und das zweite Fach durch eine Wand (18) voneinander getrennt sind, die vorzugsweise eine gemeinsame Wand ist.

2. Vorrichtung (1) nach Anspruch 1, wobei die Wand (18) eine gemeinsame Wand ist.

3. Vorrichtung (1) nach Anspruch 2, wobei die gemeinsame Wand (18) einen Vorsprung (15, 16) aufweist, der ein zu dem ersten Fach gehörendes Vorsprungsvolumen definiert und sich über eine Ebene der gemeinsamen Wand (18) hinaus in Richtung des zweiten Fachs erstreckt.

4. Vorrichtung (1) nach Anspruch 3, ferner einen Griff (8) umfassend, der sich von mindestens einem Griffende aus erstreckt, wobei sich der Griff vorzugsweise zwischen zwei Griffenden in einer Richtung quer zu der gemeinsamen Wand (18) erstreckt;
wobei das mindestens eine Griffende in Höhe des Vorsprungs angebracht ist, und
wobei die Vorrichtung (1) dazu eingerichtet ist, mittels des Griffs (8) und eines Gesamtgewichts von nicht mehr als 30 kg in der Hand gehalten zu werden.

5. Vorrichtung (1) nach den Ansprüchen 1-4, wobei das erste Fach einen Boden umfasst, der im Wesentlichen wasserdicht ist.

6. Vorrichtung (1) nach Anspruch 5, ferner eine elektrisch betriebene Steuereinheit umfassend, die in einem dritten Fach bereitgestellt ist, das sich von dem ersten und dem zweiten Fach unterscheidet;
wobei das dritte Fach und das erste Fach zumindest teilweise durch eine gemeinsame Wand voneinander getrennt sind, die den Boden des ersten Fachs bildet.

7. Vorrichtung (1) nach den Ansprüchen 1-6, wobei die Wand (18) zwischen dem ersten Fach und dem zweiten Fach einen Durchgang (17) zum Umleiten von Wärme aus dem ersten Fach in das zweite Fach umfasst.

8. Vorrichtung (1) nach Anspruch 7, ferner Mittel zur Wärmeableitung, vorzugsweise ein zweites Gebläse, umfassend, die auf Höhe des Durchgangs (17) zur Umleitung von Wärme aus dem ersten Fach in das zweite Fach bereitgestellt sind.

9. Vorrichtung (1) nach den Ansprüchen 1-8, wobei die Fachwände des ersten und des zweiten Fachs, die vorzugsweise die Fachwände des ersten, zweiten und dritten Fachs umfassen, Kunststoff umfassen, vorzugsweise aus demselben Kunststoff bestehen.

10. Vorrichtung (1) nach den Ansprüchen 1-9, wobei das erste und das zweite Fach, vorzugsweise jedes des ersten, zweiten und dritten Fachs,
- durch eine Vielzahl von Fachwänden voneinander getrennt sind, die alle gemeinsame Wände sind;
u**nd/oder**
- auf eine voneinander lösbare Weise miteinander verbunden sind.

11. Vorrichtung (1) nach den Ansprüchen 1-10, wobei jedes Fach (2, 3-4, 5-6) aus einem (2) oder mehreren Abschnitten (3-4; 5-6) besteht, die mit komplementären Aussparungen versehen sind, sodass jede die Fächer trennende Wand eine einzelne Wand ist.

12. Vorrichtung (1) nach den Ansprüchen 1-11, wobei das erste Fach durch ein Rauchkammerelement (3) und eine Abdeckkappe (4) definiert ist;
wobei das Rauchkammerelement (3) Wände und einen Boden umfasst, die rund um den und an dem Boden ein erstes Fach definieren, und wobei die Abdeckkappe (4) das erste Fach an der Oberseite definiert; und
wobei das Rauchkammerelement (3) und die Abdeckkappe (4) auf eine voneinander lösbare Weise miteinander verbunden sind.

13. System, die Vorrichtung (1) nach den Ansprüchen 1-12 und einen Fluidbehälter, der eine Glycerinlösung auf Wasserbasis enthält, umfassend.

14. Rauchkammerelement (3), umfassend:
- Wände und einen Boden, die ein in Umfangsrichtung abgedichtetes und am Boden abgedichtetes erstes Fach bilden; **dadurch gekennzeichnet, dass** das Rauchkammerelement (3) ferner umfasst:
- einen Lufteinlass (19) und einen Rauchauslass (21), die entlang gegenüberliegender Seiten des ersten Fachs als jeweilige Öffnungen durch die Wand bereitgestellt sind;
- Mittel (35) zum lösbaren Verbinden des Rauchkammerelements (3) mit einer Abdichtkappe (4) zum Abdichten des ersten Fachs an der Oberseite;
- Mittel (33) zur Verankerung eines Heizelements (14) zum Verdampfen eines Fluids, wenn dieses innerhalb des ersten Fachs angeordnet ist;
- Mittel (22) zur ausgerichteten Verankerung eines Verdampfungselements (7), wenn es innerhalb des ersten Fachs angeordnet ist, die einen Kanal zwischen zwei Kanalenden (26, 27) bilden;
wobei die ausgerichtete Verankerung mit der Ausrichtung des einen Kanalendes (26) an dem Lufteinlass (19) und der Ausrichtung des anderen Kanalendes (27) an dem Rauchauslass (21) zusammenhängt, um das Fluid zu Rauch zu verdampfen, der durch den Kanal gemäß einer sich durch das erste Fach erstreckenden Ausbreitungsrichtung strömt.

15. Verwendung des Rauchkammerelements (13) nach Anspruch 14 zur Leckerkennung mittels Rauch; wobei ein erstes Fach, das durch das Rauchkammerelement (13) definiert ist, mit einem zweiten Fach, das sich von dem ersten Fach unterscheidet, verbunden ist; wobei das zweite Fach ein Gebläse (12) umfasst; und wobei das erste und das zweite Fach durch eine Wand (18) getrennt sind, die vorzugsweise eine gemeinsame Wand ist.

## Revendications

1. Un dispositif (1) de détection de fuites au moyen de fumée, comprenant
- un ventilateur (12);
- un élément d'évaporation (7) définissant un canal entre une première extrémité de canal (26) destinée à recevoir un flux d'air provenant du ventilateur (12) et une deuxième extrémité de canal (27) destinée à l'évacuation externe de la fumée; et
- un élément chauffant (14) configuré pour évaporer un fluide et introduire de la vapeur dans ledit canal;
**caractérisé en ce que** ledit élément d'évaporation (7) et ledit élément chauffant (14) sont disposés dans un premier compartiment et dans lequel ledit ventilateur (12) est disposé dans un deuxième compartiment distinct dudit premier compartiment;
les premier et deuxième compartiments étant séparés l'un de l'autre par une paroi (18) qui est de préférence commune.

2. Le dispositif (1) selon la revendication 1, dans lequel la paroi (18) est une paroi commune.

3. Le dispositif (1) selon la revendication 2, dans lequel la paroi commune (18) comprend une saillie (15, 16) qui définit un volume de saillie appartenant au premier compartiment et s'étendant vers le deuxième compartiment au-delà d'un plan de la paroi commune (18).

4. Le dispositif (1) selon la revendication 3, comprenant en outre une poignée (8) s'étendant à partir d'au moins une extrémité de poignée, de préférence dans lequel la poignée s'étend entre deux extrémités de poignée dans une direction transversale à la paroi commune (18);
dans lequel ladite au moins une extrémité de poignée est fixée au niveau de ladite saillie, et
dans lequel ledit dispositif (1) est adapté pour être tenu à la main, au moyen de la poignée (8), et présente un poids total ne dépassant pas 30 kg.

5. Le dispositif (1) selon les revendications 1 à 4, dans lequel le premier compartiment comprend un fond qui est sensiblement étanche à l'eau.

6. Le dispositif (1) selon la revendication 5, comprenant en outre une unité de commande électrique, disposée dans un troisième compartiment distinct des premier et deuxième compartiments;
dans lequel le troisième compartiment et le premier compartiment sont au moins partiellement séparés l'un de l'autre par une paroi commune constituée par le fond du premier compartiment.

7. Le dispositif (1) selon les revendications 1 à 6, dans lequel la paroi (18) entre le premier compartiment et le deuxième compartiment comprend un passage (17) destiné à détourner la chaleur du premier compartiment vers le deuxième compartiment.

8. Le dispositif (1) selon la revendication 7, comprenant en outre des moyens de dissipation de chaleur, de préférence un deuxième ventilateur, qui sont prévus au niveau du passage (17), destinés à détourner la chaleur du premier compartiment vers le deuxième compartiment.

9. Le dispositif (1) selon les revendications 1 à 8, dans lequel les parois des premier et deuxième compartiments, comprenant de préférence les parois des premier, deuxième et troisième compartiments, sont en matière plastique, de préférence constituées de la même matière plastique.

10. Le dispositif (1) selon les revendications 1 à 9, dans lequel les premier et deuxième compartiments, de préférence chacun des premier, deuxième et troisième compartiments
- sont séparés les uns des autres par une pluralité de parois de compartiment, qui sont toutes communes;
e**t/ou**
- sont reliés de manière amovible les uns aux autres.

11. Le dispositif (1) selon les revendications 1 à 10, dans lequel chaque compartiment (2, 3-4, 5-6) est composé d'une (2) ou plusieurs sections (3-4; 5-6) qui sont pourvues d'évidements complémentaires, de sorte que chaque paroi séparant les compartiments constitue une paroi unique.

12. Le dispositif (1) selon les revendications 1 à 11, dans lequel le premier compartiment est défini par un élément de chambre de fumée (3) et un capuchon de protection (4);
dans lequel l'élément de chambre de fumée (3) comprend des parois et un fond définissant un premier compartiment autour et au fond, et dans lequel le capuchon de protection (4) définit le premier compartiment en haut; et
dans lequel l'élément de chambre de fumée (3) et le capuchon de protection (4) sont reliés de manière amovible l'un par rapport à l'autre.

13. Un système comprenant le dispositif (1) selon les revendications 1 à 12 et un réservoir de fluide contenant une solution de glycérine à base d'eau.

14. Un élément de chambre de fumée (3) comprenant:
- des parois et un fond définissant un premier compartiment scellé sur sa circonférence et au fond; **caractérisé en ce que** l'élément de chambre de fumée (3) comprend en outre:
- une entrée d'air (19) et une sortie de fumée (21) prévues le long de côtés opposés du premier compartiment sous forme d'ouvertures respectives traversant la paroi;
- des moyens (35) destinés à relier de manière amovible l'élément de chambre de fumée (3) à un capuchon d'étanchéité (4) destiné à sceller le premier compartiment par le haut;
- des moyens (33) destinés à ancrer, lorsqu'il est disposé à l'intérieur du premier compartiment, un élément chauffant (14) destiné à vaporiser un fluide;
- des moyens (22) destinés à l'ancrage aligné, lorsqu'il est disposé à l'intérieur du premier compartiment, d'un élément d'évaporation (7) définissant un canal entre deux extrémités de canal (26, 27);
dans lequel l'ancrage aligné est lié à l'alignement de l'une des extrémités du canal (26) avec l'entrée d'air (19) et à l'alignement de l'autre extrémité du canal (27) avec la sortie de fumée (21) pour vaporiser le fluide en fumée s'écoulant à travers le canal selon une direction de propagation s'étendant à travers le premier compartiment.

15. Une utilisation de l'élément de chambre de fumée (13) selon la revendication 14 pour la détection de fuites au moyen de fumée; dans lequel un premier compartiment défini par l'élément de chambre de fumée (13) est relié à un deuxième compartiment distinct du premier compartiment; dans lequel le deuxième compartiment comprend un ventilateur (12); et dans lequel les premier et deuxième compartiments sont séparés par une paroi (18) qui est de préférence commune.
